## Europäisches Patentamt

## European Patent Office

## Office européen des brevets

(11) Veröffentlichungsnummer: **0 194 410**
**B1**

(12) # EUROPÄISCHE PATENTSCHRIFT

(45) Veröffentlichungstag der Patentschrift:
**19.11.87**

(51) Int. Cl.⁴: **F 16 H 1/44,** B 60 K 23/08

(21) Anmeldenummer: **86100336.6**

(22) Anmeldetag: **13.01.86**

(54) Sperrsystem für ein Kraftfahrzeug mit Allradantrieb.

**Ein Antrag gemäss Regel 88 auf Berichtigung der Zeilen 5 und 6 des Anspruchs 2 wurde am 25.01.1986 eingereicht.**

(30) Priorität: 02.03.85 DE 3507490

(43) Veröffentlichungstag der Anmeldung:
**17.09.86 Patentblatt 86/38**

(45) Bekanntmachung des Hinweises auf die Patenterteilung:
**19.11.87 Patentblatt 87/47**

(84) Benannte Vertragsstaaten:
**AT BE CH DE FR GB IT LI NL SE**

(56) Entgegenhaltungen:
**EP - A - 0 066 449**
**EP - A - 0 118 155**
**CH - A - 66 021**
**CH - A - 287 435**
**DE - A - 1 802 456**
**DE - A - 3 218 830**
**FR - A - 1 024 532**
**GB - A - 1 093 798**
**GB - A - 1 583 655**
**US - A - 2 228 581**
**US - A - 3 838 610**
**US - A - 3 871 249**
**US - A - 4 138 906**
**US - A - 4 464 973**
**US - A - 4 493 227**

(73) Patentinhaber: **Dr.Ing.h.c. F. Porsche Aktiengesellschaft, Porschestrasse 42, D-7000 Stuttgart 40 (DE)**

(72) Erfinder: **Müller, Robert, Badstrasse 21, D-7251 Mönsheim (DE)**

ACTORUM AG

# Beschreibung

Die Erfindung betrifft ein Sperrsystem für ein Kraftfahrzeug mit Allradantrieb nach dem Oberbegriff des Anspruchs 1.

Bei einem aus DE-A-32 18 830 bekannten Allradantrieb ist zur Aufteilung der Antriebsleistung auf die Vorderachse und Hinterachse des Kraftfahrzeuges einem Geschwindigkeitswechselgetriebe ein Verteilergetriebe nachgeschaltet, das als Planetengetriebe ausgeführt ist. In einem Abtriebszweig des Planetengetriebes ist eine schaltbare Kupplung und eine schaltbare Bremse angeordnet, mit der der Abtriebszweig gegenüber dem Getriebegehäuse festlegbar ist. Die Übersetzungsverhältnisse des Planetengetriebes sind so gewählt, dass beim Abschalten des einen Abtriebszweiges durch Ausrücken der Kupplung und Anlegen der Bremse der andere Abtriebszweig mit einer Übersetzung ins Schnelle angetrieben wird. Hierdurch soll bei günstigen Strassenverhältnissen das Fahren mit einer Spreizung des Gesamtgetriebes und ein Gangsprung ins Schnelle ermöglicht werden, während bei eingerückter Kupplung und ausgerückter Bremse die Vorderachse und die Hinterachse angetrieben werden.

Ausgehend von diesem bekannten Antriebssystem besteht die Aufgabe der Erfindung darin, ein Sperrsystem für einen permanenten Allradantrieb zu schaffen, das bei Durchrutschen der einen Achse eine der Drehzahldifferenz zur anderen Achse entsprechende Sperrung und einen Synchronlauf beider Achsen ermöglicht, ohne dass hierzu ein hohes Bremsmoment und eine grossvolumige Bremse oder Kupplung erforderlich ist.

Zur Lösung dieser Aufgabe dienen die kennzeichnenden Merkmale des Anspruchs 1. Eine besonders vorteilhafte Ausgestaltung der Erfindung ergeben die Merkmale des Anspruchs 2. Dreht beispielsweise die Vorderachse infolge Durchrutschens auf Eis schneller als die Hinterachse, so wird der Planetenträger und das mit ihm verbundene Bremsglied der Bremsvorrichtung mit hoher Übersetzung von ca. 16:1 zur Differenzdrehzahl der Antriebswelle in Drehung versetzt. Hierbei wird ein Widerstand erzeugt, der eine Drehmomentübertragung an die Hinterachse zur Folge hat. Wegen der hohen Übersetzung und des damit verbundenen schlechten Zahnrad-Wirkungsgrades ist das aufzubringende Bremsmoment sehr gering, so dass eine kleinvolumige, hydrodynamische Bremse oder Fliehkraftbremse ausreicht.

Vorzugsweise wird nach Anspruch 3 eine Bremse mit progressiver Bremsmoment-Differenzdrehzahl-Kennlinie verwendet. Denn auf diese Weise wird das Sperrmoment bei kleinen Schlupfwerten kleingehalten; das Fahrzeug ist gut lenkbar und ein ABS-System voll funktionsfähig. Bei grossen Schlupfwerten, wie sie z.B. auftreten, wenn die Räder einer Achse auf Eis, die Räder der anderen Achse auf griffigem Asphalt stehen, steigt das Sperrmoment in der erwünschten Art steil an und ermöglicht auch in diesem Extremfall ein problemloses Anfahren.

Weitere, die Erfindung ausgestaltende Merkmale enthalten die Ansprüche 4 bis 9.

Zwei Ausführungsbeispiele der Erfindung sind in der Zeichnung dargestellt und werden nachfolgend erläutert.

Es zeigt

Fig. 1 Allradantrieb mit Frontmotor, Planetengetriebe und Bremsvorrichtung,

Fig. 2 Allradantrieb wie Fig. 1, jedoch zusätzlich mit Verteilergetriebe,

Fig. 3 Kennlinien: Bremsmoment - Differenzdrehzahl der Achsen,

Fig. 4 Querschnitt einer Fliehkraftbremse.

Ein nahe der Vorderachse 1 an einem Kraftfahrzeug angeordneter Antriebsmotor 2 treibt mit einem an ihm angebauten Gangschaltgetriebe 3 über ein Kegelrad 4 und ein Tellerrad 5 die Vorderachse 1 an. Von dem Kegelrad 4 geht eine Antriebswelle 6 zu einem Eingangssonnenrad 7 eines Planetengetriebes 8. Koaxial zu dem Eingangssonnenrad 7 ist neben ihm ein Ausgangssonnenrad 9 gelagert, von dem eine Abtriebswelle 10 zu einem Kegelrad 11 führt, das ein Tellerrad 12 der Hinterachse 13 antreibt.

Mit dem Eingangssonnenrad 7 und dem Ausgangssonnenrad 9 stehen Planetenräder 14 in Eingriff, die an einem Planetenträger 15 gelagert sind, der mit dem Bremsglied einer hydrodynamichen Bremse 16 starr verbunden ist. In diesem Ausführungsbeispiel hat das Eingangssonnenrad 7 eine Zähnezahl $Z=32$, das Ausgangssonnenrad eine Zähnezahl $Z=30$. Die Übersetzung zum Planetenträger 14 beträgt 16:1. Um zu vermeiden, dass die Hinterachse 13 schneller dreht als die Vorderachse 1, ist die Kegelrad-Tellerrad-Übersetzung der Hinterachse 13 mit 8:32, die entsprechende Übersetzung an der Vorderachse 1 mit 8:30 ausgelegt, so dass die Durchtriebsübersetzung voll ausgeglichen wird.

Wird dieselbe Antriebsanordnung für ein Fahrzeug mit Heckmotor verwendet, so ist es von Vorteil, wenn die zusätzlich angetriebene Vorderachse auch dann noch angetrieben wird, wenn sie eine geringfügig höhere Drehzahl als die Hinterachse (motornahe Achse 1) aufweist. Dies wird erreicht, indem die Durchtriebsübersetzung des Planetengetriebes von der Vorderachsübersetzung nur teilweise kompensiert wird. Im dargestellten Ausführungsbeispiel beträgt die Kompensation 50%. Dadurch wird ein Vorderachsantrieb mit bis zu 3,33% schneller laufender Vorderachse bei stillstehendem Planetenträger möglich. Bei Geradeausfahrt wird das Bremselement allerdings mit einer fahrgeschwindigkeitsabhängigen Drehzahl beaufschlagt, was je nach Kennlinie des Bremselements zu Leistungsverlusten führt. Hier empfiehlt es sich, das Bremsmoment bei hohen Fahrgeschwindigkeiten mittels einer fahrgeschwindigkeitsabhängigen externen Ansteuerung oder einer Fliehkraftsteuerung zu reduzieren bzw. den Vorderachsantrieb durch Öffnen der Bremse ganz abzuschalten.

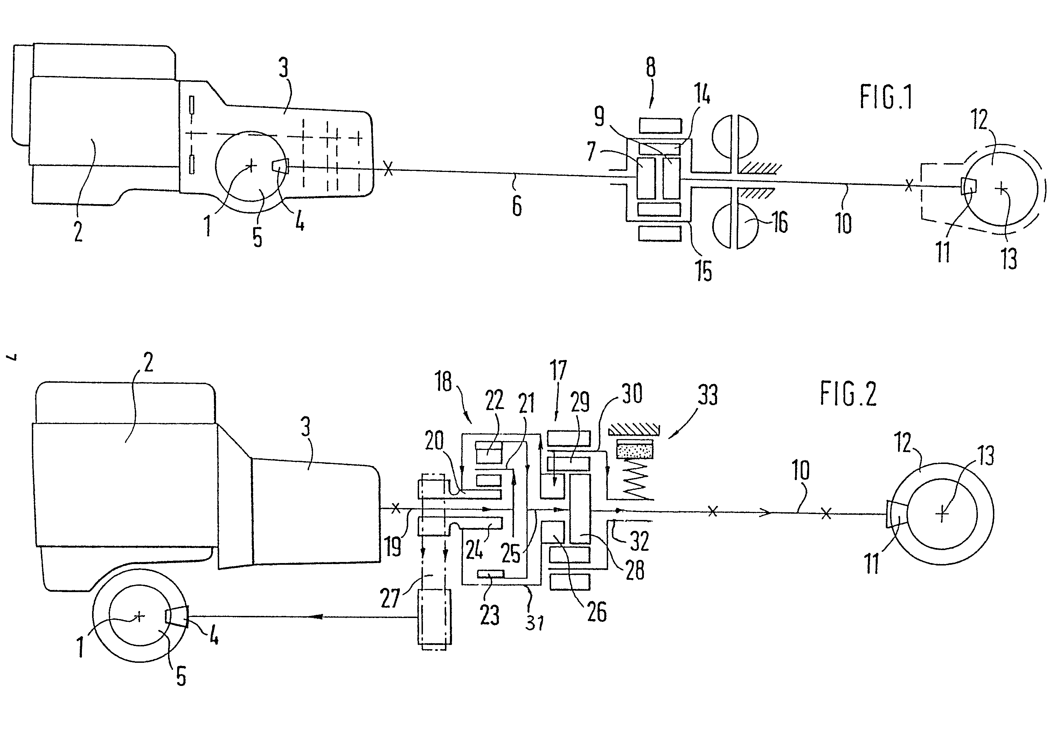

In einer weiteren Ausführungsform der Erfindung nach Fig. 2 ist einem den Direktdurchtrieb vermittelnden Planetengetriebe 17 ein Verteilergetriebe 18 vorgeschaltet, das ebenfalls als Planetengetriebe ausgebildet ist und eine Aufteilung des Antriebsmomentes auf die Vorderachse 1 und Hinterachse 13 in einem festen Verhältnis ermöglicht. Der Bewegungsfluss in der Getriebeanordnung ist durch Pfeile angedeutet. Eine vom Gangschaltgetriebe 3 ausgehende Antriebswelle 19 ist durch eine Hohlwelle 20 des Verteilergetriebes 18 durchgeführt und treibt einen Planetenträger 21, dessen Planetenräder 22 einerseits ein Hohlrad 23, andererseits ein auf der Hohlwelle 20 angebrachtes Sonnenrad 24 antreiben und somit den mit der Hohlwelle 20 umlaufenden Kettentrieb 27 zur Vorderachse 1 treiben. Eine mit dem Hohlrad 23 verbundene Zentralwelle 25 ist zentrisch durch das eine Sonnenrad 26 des Planetengetriebes 17 durchgeführt und mit einem zweiten, parallel daneben gelagerten Sonnenrad 28 verbunden, mit dem die Abtriebswelle 10 zur Hinterachse 13 starr verbunden ist. Das Sonnenrad 28 treibt die Planetenräder 29 eines Planetenträgers 30, die mit dem Sonnenrad 26 kämmen, das über eine das Verteilergetriebe 18 übergreifende Glocke 31 an der Hohlwelle 20 befestigt ist.

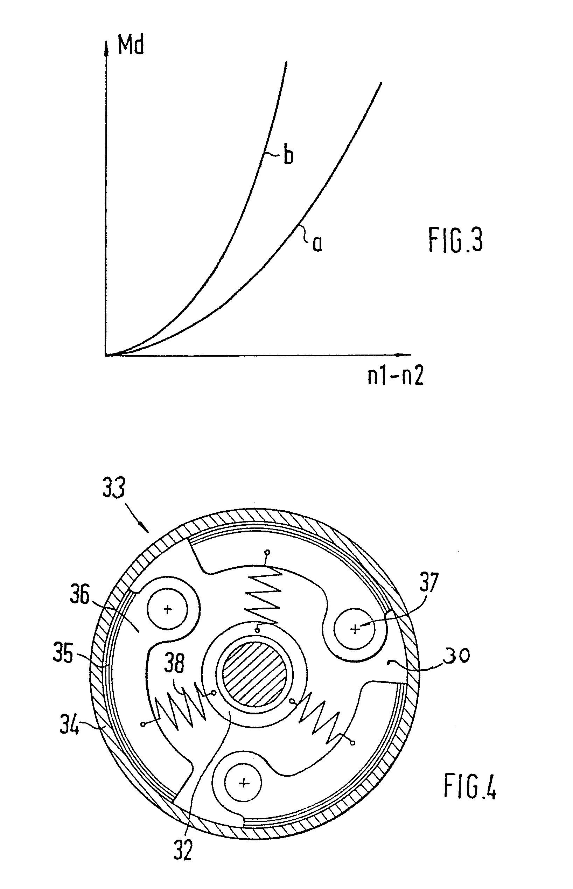

Auf eine mit dem Planetenträger 30 verbundene zentrale Bremswelle 32 wirkt eine Fliehkraftbremse 33 ein, deren Konstruktion in Fig. 3 näher dargestellt ist. Das Sonnenrad 26 hat eine Zähnezahl von Z=31, das Sonnenrad 28 eine Zähnezahl von Z=32. Die Kegelrad-Tellerrad-Achsübersetzung zur Vorderachse 1 beträgt 9:33, zur Hinterachse 9:31, so dass die Durchtriebsübersetzung zu 50% kompensiert ist.

Die Fliehkraftbremse 33 nach Fig. 4 besteht aus einer feststehenden Bremstrommel 34, an der drei rotierende, gelenkig gelagerte, mit Bremsbelägen 35 versehene Bremsbacken 36 von innen durch Fliehkraft angedrückt werden. Die Lagerbolzen 37 der Bremsbacken 36 sind am Planetenträger 30 angebracht. Durch Zugfedern 38 sind sie mit der zentralen, hohlgebohrten, mit dem Planetenträger 30 umlaufenden Bremswelle 32 verbunden.

Das durch die Fliehkraftbremse am Planetenträger aufgebrachte Bremsmoment $M_D$ in Abhängigkeit von der Drehzahldifferenz n1-n2 zwischen Hinterachse 13 und Vorderachse 1 ist in Fig. 3 dargestellt. Es steigt progressiv mit der Drehzahldifferenz an. Bei Drehrichtung im Uhrzeigersinn ergibt sich die Kurve a, bei Drehrichtung entgegen dem Uhrzeigersinn die steiler ansteigende Kurve b.

Als Bremsvorrichtung 16 kann eine von aussen gesteuerte Bremse, z.B. eine mit Hydraulikdruck beaufschlagbare Lamellenbremse oder eine elektrische Wirbelstrombremse verwendet werden.

**Patentansprüche**

1. Sperrsystem im Antriebsstrang Vorderachse-Hinterachse eines Kraftfahrzeugs mit permanentem Allradantrieb bestehend aus einem Planetengetriebe (8, 17) mit Bremsvorrichtung (16, 33), *dadurch gekennzeichnet,* dass das Planetengetriebe (8, 17) als Durchtrieb zwischen Vorder- und Hinterachse (1, 13) angeordnet ist, wobei sein freies drittes Getriebeelement (15, 30) durch die für Schlupfbetrieb ausgelegte auf die Drehzahldifferenz zwischen Vorderachse und Hinterachse ansprechende Bremsvorrichtung (16, 33) bremsbar ist und die Zahnradübersetzung für den Durchtrieb, bezogen auf ein stehendes drittes Getriebeelement, geringfügig von 1:1 abweicht, wogegen die Zahnradübersetzung von der Vorderachse bzw. der Hinterachse hin zur Bremsvorrichtung wesentlich höher ist.

2. Sperrsystem nach Anspruch 1, dadurch gekennzeichnet, dass der Durchtrieb aus einem Eingangssonnenrad (7), einem koaxial daneben gelagerten und mit der zu treibenden Achse (13) verbundenen Ausgangssonnenrad (9) etwas grösserer Zähnezahl sowie aus den mit beiden Sonnenrädern (7, 9) in Eingriff stehenden Planetenrädern (14) eines Planetenträgers (15) gebildet ist, auf dessen Drehbewegung die Bremsvorrichtung (16) hemmend einwirkt, wobei die Übersetzung vom Eingangssonnenrad (7) zum Planetenträger (15) etwa 16:1 beträgt.

3. Sperrsystem nach Anspruch 1 oder 2, dadurch gekennzeichnet, dass die Bremsvorrichtung (16) ein in Abhängigkeit zur Drehzahldifferenz zwischen Vorder- und Hinterachse progressiv ansteigendes Bremsmoment aufbaut (Fig. 3).

4. Sperrsystem nach Anspruch 1 oder 3, dadurch gekennzeichnet, dass dem Planetengetriebe (8) ein Verteilergetriebe (18) vorgeschaltet ist, das einerseits über ein Gangschaltgetriebe (3) mit dem Antriebsmotor (2) des Kraftfahrzeuges, andererseits mit der motornahen Achse (1) in Antriebsverbindung steht.

5. Sperrsystem nach einem der Ansprüche 1 bis 4, dadurch gekennzeichnet, dass als Bremsvorrichtung (16) eine selbsttätig wirkende Bremse, z.B. eine fliehkraftgesteuerte, mechanische Reibungsbremse oder eine hydrodynamische Bremse (16) verwendet wird.

6. Sperrsystem nach einem der Ansprüche 1 bis 4, dadurch gekennzeichnet, dass als Bremsvorrichtung (16) eine von aussen gesteuerte Bremse, z.B. eine mit Hydraulikdruck beaufschlagbare Lamellenbremse oder eine elektrische Wirbelstrombremse verwendet wird.

7. Sperrsystem nach einem der Ansprüche 1 bis 5, dadurch gekennzeichnet, dass das Bremsglied der Bremsvorrichtung (16) für beide Drehrichtungen des Antriebsstranges unterschiedliche Bremsmoment-Drehzahldifferenz-Kennlinien (a, b) aufweist.

8. Sperrsystem nach Anspruch 2 oder 3, dadurch gekennzeichnet, dass die Achsübersetzungen zum unmittelbaren Antrieb der Vorderachse (1) und Hinterachse (13) im umgekehrten Verhältnis wie die Durchtriebsübersetzung des Planetengetriebes (8) ausgelegt sind, so dass bei gleicher Drehzahl von Vorderachse (1) und Hinterachse (13) der Planetenträger (15) ungebremst stillsteht.

9. Sperrsystem nach Anspruch 3, dadurch gekennzeichnet, dass als Verteilergetriebe ein Planetengetriebe (18) verwendet ist.

## Claims

1. A locking system in the front-axle/rear-axle driving line of a motor vehicle with permanent four-wheel drive, the locking system comprising a planetary gear (8, 17) having braking apparatus (16, 33), characterized in that the planetary gear (8, 17) is arranged as a through drive between the front and rear axle (1, 13), the free third gear element (15, 30) of the planetary gear being brakable by the braking apparatus (16, 33) which is designed for skidding operation and responds to the difference in rotational speed between the front axle and the rear axle (1, 13), the gearwheel transmission ratio for the through drive diverging slightly from 1:1 relative to a stationary third gear element, while the gearwheel transmission ratio from the front axle or the rear axle to the braking apparatus is substantially higher.

2. A locking system according to Claim 1, characterized in that the through drive is formed by an input sun wheel (7), an output sun wheel (9) having a somewhat greater number of teeth than the input sun wheel and being mounted coaxially adjacent thereto and connected to the axle (13) to be driven, and the planet wheel (14) of a planet carrier (15) engaging with the two sun wheels (7, 9), the braking apparatus (16) acting upon the rotational movement of the planet carrier (15) in a retarding manner, and the transmission ratio from the input sun wheel (7) to the planet carrier (15) amounting to approximately 16:1.

3. A locking system according to Claim 1 or 2, characterized in that the braking apparatus (16) creates a braking moment which increases progressively as a function of the difference in rotational speed between the front axle and the rear axle (Fig. 3).

4. A locking system according to Claim 1 or 3, characterized in that a distributor gear (18) is arranged in line with the planetary gear (8), the distributor gear being in driving connection with the engine (2) of the motor vehicle by means of a gearshift mechanism (3) on the one hand and with the shaft (1) close to the engine on the other hand.

5. A locking system according to any one of Claims 1 to 4, characterized in that an automatically operating brake, e.g. a mechanical friction brake controlled by centrifugal force or a hydrodynamic brake (16), is used as the braking apparatus (16).

6. A locking system according to any one of Claims 1 to 4, characterized in that an externally controlled brake, e.g. a multiple-disc brake acted upon by hydraulic pressure or an electrical eddy-current brake, is used as the braking apparatus (16).

7. A locking system according to any one of Claims 1 to 5, characterized in that the brake element of the braking apparatus (16) for both directions of rotation of the driving line has different braking-moment rotational-speed-difference characteristics (a,b).

8. A locking system according to Claim 2 or 3, characterized in that the axle transmission ratios to the direct drive of the front axle (1) and the rear axle (13) are arranged inversely to the through drive transmission ratio of the planetary gear (8), so that when the rotational speed of the front axle (1) and the rear axle (13) are the same the unbraked planet carrier (15) is stationary.

9. A locking system according to Claim 3, characterized in that a planetary gear (18) is used as the distributor gear.

## Revendications

1. Système de blocage dans le trajet de transmission essieu avant - essieu arrière d'un véhicule automobile à traction toutes roues motrices permanentes, comprenant un train planétaire (8, 17) avec un dispositif de freinage (16, 33), caractérisé en ce que le train planétaire (8, 17) est disposé, en tant que transmission directe, entre l'essieu avant et l'essieu arrière (1, 13), son troisième élément de transmission libre (15, 30) pouvant être freiné par le dispositif de freinage (16, 33) calculé pour le fonctionnement en glissement et réagissant à la différence de vitesses de rotation entre l'essieu avant et l'essieu arrière, et le rapport d'engrenages pour la transmission directe, rapporté à un troisième élément de transmission fixe, étant légèrement différent de 1:1, tandis que le rapport d'engrenages de l'essieu avant ou de l'essieu arrière vers le dispositif de freinage est nettement supérieur.

2. Système de blocage selon la revendication 1, caractérisé en ce que la transmission directe comprend une roue planette d'entrée (7), une roue planette de sortie (9) d'un nombre de dents un peu supérieur, placée coaxialement à côté et reliée à l'essieu (13) à entraîner, ainsi que les pignons-satellites (14) d'un porte-pignons satellites (15) engrenant avec les deux roues planettes (7, 9), porte-pignons sur le mouvement de rotation duquel agit le dispositif de freinage (16), le rapport de la roue planette d'entrée (7) au porte-pignons satellites (15) étant d'environ 16:1.

3. Système de blocage selon la revendication 1 ou 2, caractérisé en ce que le dispositif de freinage (16) établit un couple de freinage augmentant progressivement en fonction de la différence de vitesses de rotation entre l'essieu avant et l'essieu arrière (figure 3).

4. Système de blocage selon la revendication 1 ou 3, caractérisé en ce qu'il est monté en amont du train planétaire (8) une boîte de transfert (18) qui est reliée cinématiquement, d'une part, par l'intermédiaire d'une boîte de vitesses (3), au moteur d'entraînement (2) du véhicule automobile et, d'autre part, à l'essieu (1) proche du moteur.

5. Système de blocage selon l'une des revendications 1 à 4, caractérisé en ce qu'on utilise, comme dispositif de freinage (16), un frein à action automatique, par exemple un frein à friction mécanique à commande centrifuge ou un frein hydrodynamique (16).

6. Système de blocage selon l'une des revendications 1 à 4, caractérisé en ce qu'on utilise, comme dispositif de freinage (16), un frein commandé extérieurement, par exemple un frein à disques multiples sur lequel peut agir une pression hydraulique ou un frein électrique à courants de Foucault.

7. Système de blocage selon l'une des revendications 1 à 5, caractérisé en ce que l'élément de frein du dispositif de freinage (16) présente des caractéristiques couple de freinage-différence de vitesses de rotation (a, b) différentes pour les deux sens de rotation du train de transmission.

8. Système de blocage selon la revendication 2 ou 3, caractérisé en ce que les rapports d'essieu pour l'entraînement direct de l'essieu avant (1) et de l'essieu arrière (13) sont calculés en proportion inverse du rapport de transmission directe du train planétaire (8), de sorte que, pour une même vitesse de rotation de l'essieu avant (1) et de l'essieu arrière (13), le porte-pignons satellites (15) est immobilisé sans être freiné.

9. Système de blocage selon la revendication 3, caractérisé en ce qu'on utilise, comme boîte de transfert, une boîte à engrenages planétaires (18).

0 194 410

FIG.1

FIG.2

FIG.3

FIG.4